# EUROPÄISCHE PATENTSCHRIFT

(11) **EP 3 419 849 B1**
(45) Veröffentlichungstag und Bekanntmachung des Hinweises auf die Patenterteilung: **15.05.2019**
(21) Anmeldenummer: 17709643.5
(22) Anmeldetag: 07.03.2017
(51) Int. Cl.: B60K 13/04, F01N 13/18, F16L 55/035

(54) **HALTEVORRICHTUNG FÜR EINE AUSPUFFANLAGE**
HOLDING DEVICE FOR AN EXHAUST SYSTEM
DISPOSITIF DE RETENUE POUR UN SYSTÈME D'ÉCHAPPEMENT

(30) Priorität: 08.03.2016 DE 102016104211
(43) Veröffentlichungstag der Anmeldung: 02.01.2019
(73) Patentinhaber: Vibracoustic GmbH, 64293 Darmstadt (DE)
(72) Erfinder: HADJI, Mohamed, 68400 Riedisheim (FR); TENAILLEAU, Alexandre, 44230 Saint-Sébastien-sur-Loire (FR)
(74) Vertreter: Flügel Preissner Schober Seidel
(86) Internationale Anmeldenummer: PCT/EP2017/055346
(87) Internationale Veröffentlichungsnummer: WO 2017/153419

(56) Entgegenhaltungen:
- EP-A1- 2 666 988
- WO-A1-2011/018605
- US-A1- 2003 057 348

## Beschreibung

Die Erfindung betrifft eine Haltevorrichtung zum Halten einer Auspuffleitung einer Auspuffanlage mittels einer gelagerten Stützeinrichtung, mit einem Trageabschnitt zur Aufnahme der Stützeinrichtung und einem Befestigungsabschnitt zur Befestigung der Haltevorrichtung an einem Fahrzeug.

Derartige Haltevorrichtungen dienen dazu, die Auspuffleitung relativ zu dem Fahrzeug zu lagern. Dabei soll vermieden werden, dass die Auspuffleitung aufgrund von mechanischen Schwingungen und/oder Erschütterungen mit Teilen des Fahrzeugs kollidiert. Derartige Erschütterungen können beispielsweise entstehen, wenn das Fahrzeug über Fahrbahnunebenheiten, beispielsweise Schlaglöcher, fährt. Des Weiteren werden derartige Haltevorrichtungen verwendet, um Teile einer Auspuffanlage vorzumontieren und so die endgültige Montage zu vereinfachen.

Aus der EP 2 666 988 A1 ist beispielsweise eine Haltevorrichtung für eine Auspuffanlage bekannt, die einen Körper aus einem elastischen Material aufweist. In dem Körper sind Öffnungen vorgesehen, in die jeweils Abschnitte des Fahrzeugs und der Auspuffanlage eingesetzt werden.

DE 10 2010 028 084 A1 betrifft ein elastisches Lager zur Aufhängung einer Abgasanlage mit einer einfach zu montierenden Grundplatte. An der Grundplatte ist ein Federkörper zur Befestigung eines Abgasrohres angebracht. Der Federkörper ist durch eine Verliersicherung in Form eines Rings gesichert. Die Grundplatte ist an einer Platte eines Fahrzeugs mittels mehrerer Ankerelemente, welche eine Clipverbindung bereitstellen, befestigt. DE 10 2012 105 023 A1, DE 10 2006 010 973 A1 und DE 11 2006 002 536 T5 beschreiben jeweils Varianten von Haltevorrichtungen für Auspuffleitungen. US 6,926,273 B2 befasst sich mit einer Vorrichtung zur Anbringung von Bremsleitungen, während, während sich DE 24 55 866 C3 allgemein mit einem Befestigungselement zur Befestigung länglicher Werkstücke beschäftigt.

Die Erfindung geht auf die Aufgabe zurück, eine Haltevorrichtung der eingangs genannten Art derart weiterzubilden, dass die Montage der Haltevorrichtung an dem Körper eines Fahrzeugs vereinfacht ist.

Zur Lösung der Aufgabe wird eine Haltevorrichtung zum Halten einer Auspuffleitung einer Auspuffanlage vorgeschlagen, die einen Trageabschnitt zur Aufnahme der Stützeinrichtung und einen Befestigungsabschnitt zur Befestigung der Haltevorrichtung an einem Fahrzeug aufweist, wobei der Befestigungsabschnitt ein Federelement mit einem Schnapphaken zur Ausbildung einer Schnappverbindung aufweist. Der Befestigungsabschnitt weist ein erstes Federelement und ein zweites Federelement auf, wobei das erste Federelement eine geringere Höhe als das zweite Federelement aufweist.

Die erfindungsgemäße Lösung hat insbesondere den Vorteil, dass zur Montage der Haltevorrichtung kein weiteres Werkzeug notwendig ist. Des Weiteren wird durch die Schnappverbindung eine wenigstens vorläufige Ausrichtung und Festlegung der Haltevorrichtung auf einfache Weise erreicht. Bei entsprechender Dimensionierung der Schnappverbindung kann eine weitere Befestigung auch entbehrlich sein. Schnappverbindungen sind gewöhnlich trennbar, so dass das Recycling ebenfalls vereinfacht wird.

Vorteilhafte Ausgestaltungen sind Gegenstand der Unteransprüche.

Der Befestigungsabschnitt weist zwei Federelemente auf. Eine derartige Ausgestaltung mit zwei Federelementen vereinfacht es, die Schnappverbindung zuverlässig zu gestalten.

Die Schnapphaken der Federelemente können in einander entgegengesetzten Richtungen ausgerichtet sein. Da somit die Federwege der beiden Schnapphaken einander entgegengesetzt sind, spannen sich die Schnapphaken im eingeschnappten Zustand gegenseitig vor. Dadurch verbessert sich die Haltbarkeit der Verbindung und die Festigkeit gegen Erschütterungen ist erhöht. Darüber hinaus wird die Präzision der Ausrichtung der Haltevorrichtung verbessert, wobei ein Verdrehen der Haltevorrichtung vermieden wird. Auch die gewünschte Position wird präziser erreicht.

Die Federelemente können parallel zueinander ausgerichtet sein. Dies bewirkt eine weiter verbesserte Haltbarkeit.

Das Federelement kann von dem Befestigungsabschnitt an einer Seite, die von dem Trageabschnitt abgewandt ist, abragend angeordnet sein. Dies erlaubt eine eindeutige örtliche Trennung der beiden Abschnitte.

Der Trageabschnitt kann eine Öffnung zur Aufnahme der Stützeinrichtung aufweisen. Die Öffnung erlaubt es, die Stützeinrichtung innerhalb des Trageabschnitts nicht nur zu mutieren, sondern weist zusätzlich Raum auf, um beispielsweise eine Lagerung der Stützeinrichtung zu integrieren. Somit wird eine verbesserte Lagerung und Schwingungsentkopplung der Stützeinrichtung bewirkt.

Die Öffnung kann einen kreisrunden Querschnitt aufweisen. Die sich dadurch ergebende Form einer Innenwand des Trageabschnitts ist gut verarbeitbar und eine gleichmäßige Lastverteilung, beispielsweise durch eine in die Öffnung integrierte Elastomerfeder.

Der Trageabschnitt kann an einer Außenseite Verstärkungsrippen aufweisen. Durch derartige Verstärkungsrippen wird die Festigkeit des Trageabschnitts erhöht. Im Vergleich zu einer gleichmäßigen Erhöhung einer Wandstärke des Trageabschnitts wird dadurch bei gleicher Festigkeit Material eingespart und somit auch das Gewicht der Haltevorrichtung verringert.

Die Verstärkungsrippen können um den Trageabschnitt wenigstens teilweise umlaufend angeordnet sein. Dies bewirkt eine möglichst gleichmäßige Festigkeitserhöhung.

Der Befestigungsabschnitt kann eine Montageöffnung zur Aufnahme eines Befestigungs- und/oder Positionierungsmittels aufweisen. Ein zusätzlich zu der Schnappverbindung verwendetes Befestigungsmittel erhöht die Zuverlässigkeit und Belastbarkeit der Verbindung mit dem Fahrzeug. Ein Positionierungsmittel vereinfacht eine präzise Montage der Haltevorrichtung.

Die Erfindung wird nachfolgend anhand von Ausführungsbeispielen näher erläutert, und die in den beigefügten Figuren lediglich schematisch dargestellt sind. Es zeigen im Einzelnen:

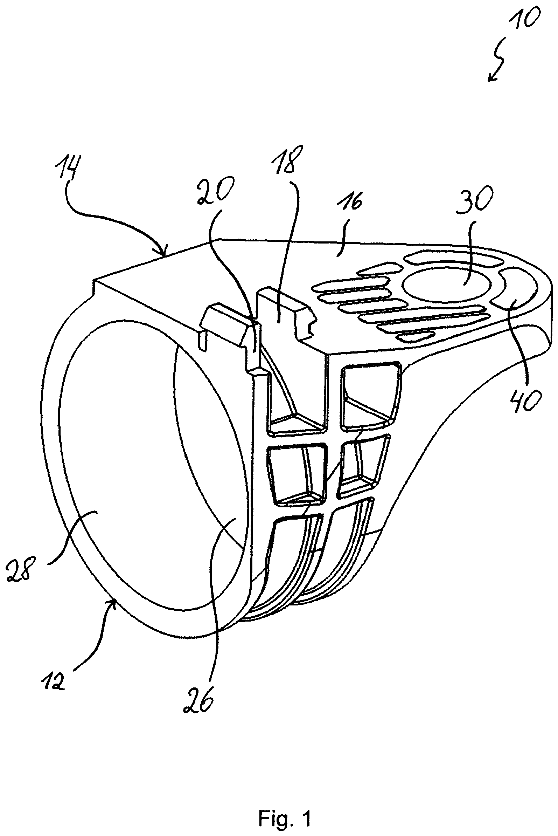

- Fig. 1: eine dreidimensionale Sicht auf eine Haltevorrichtung gemäß einer ersten Ausführungsform der vorliegenden Erfindung;
- Fig. 2: eine Seitenansicht auf die Haltevorrichtung gemäß Fig. 1;
- Fig. 3: eine dreidimensionale Ansicht auf die Haltevorrichtungen gemäß Fig. 1 in montiertem Zustand;
- Fig. 4: eine Schnittansicht der Haltevorrichtung gemäß Fig. 1 in montiertem Zustand und
- Fig. 5: eine Seitenansicht auf eine Haltevorrichtung gemäß einer zweiten Ausführungsform der vorliegenden Erfindung.

Eine Haltevorrichtung 10 gemäß der vorliegenden ersten Ausführungsform weist einen Trageabschnitt 12 und einen Befestigungsabschnitt 14 auf. An dem Befestigungsabschnitt 14 ist eine Anlagefläche 16 vorgesehen, die an die Form eines Teils eines Fahrzeugs angepasst ist, an welchem die Haltevorrichtung 10 befestigt werden soll. Bei der vorliegenden Ausführungsform ist beispielsweise eine plane Anlagefläche 16 vorgesehen, die zur Anlage an eine wenigstens teilweise plane Fläche des Fahrzeugs ausgebildet ist.

Von dem Befestigungsabschnitt 14 abragend sind ein erstes Federelement 18 und ein zweites Federelement 20 angeordnet, die beispielsweise senkrecht von dem Befestigungsabschnitt 14 abragen. Die Federelemente 18, 20 weisen jeweils einen im Wesentlichen rechteckigen Querschnitt auf und sind beispielsweise parallel zueinander ausgerichtet. Dabei sind die Federelemente 18, 20 beispielsweise voneinander beabstandet ausgerichtet.

Der Trageabschnitt 12 ist beispielsweise an einer Seite der Haltevorrichtung 10 angeordnet, die von der Seite abgewandt ist, an welcher die Federelemente 18, 20 angeordnet sind. Der Trageabschnitt 12 ist um eine beispielsweise kreisrunde Öffnung 26 herum angeordnet und definiert diese mit einer Innenwand 28. Die Öffnung 26 ist beispielsweise zur Aufnahme einer Lagereinrichtung, beispielsweise einer Elastomerfeder, mit einer Stützeinrichtung geeignet.

Die Öffnung 26 kann je nach der konkreten Bauform auch andere Querschnitte aufweisen, beispielsweise einen quadratischen, rechteckigen oder ovalen Querschnitt.

Der Befestigungsabschnitt 14 weist in der vorliegenden Ausführungsform eine Montageöffnung 30 auf. Die Montageöffnung 30 kann beispielsweise zur Durchführung eines Befestigungsmittels oder zur Aufnahme eines Positionierungszapfens dienen.

Die Haltevorrichtung 10 ist beispielsweise als einteiliges Kunststoffteil ausgebildet, das insbesondere als Spritzgussteil hergestellt wird.

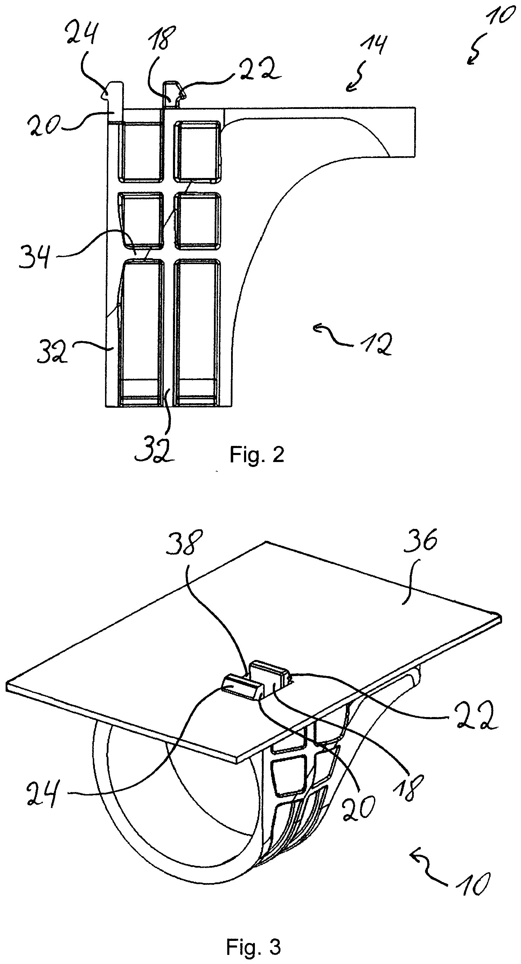

Wie in Fig. 2 gezeigt, weisen die Federelemente 18, 20 jeweils einen Schnapphaken 22, 24 auf. Die Schnapphaken 22, 24 sind beispielsweise an voneinander abgewandten Seiten der beiden Federelemente 18, 20 angeordnet und haben jeweils eine Spitze, wobei die Spitzen der beiden Schnapphaken 22, 24 in entgegengesetzte Richtungen weisen. Zur vereinfachten Montage können die Schnapphaken 22, 24 Einführschrägen aufweisen. Die Einführschrägen können in unterschiedliche Richtungen geneigt sein.

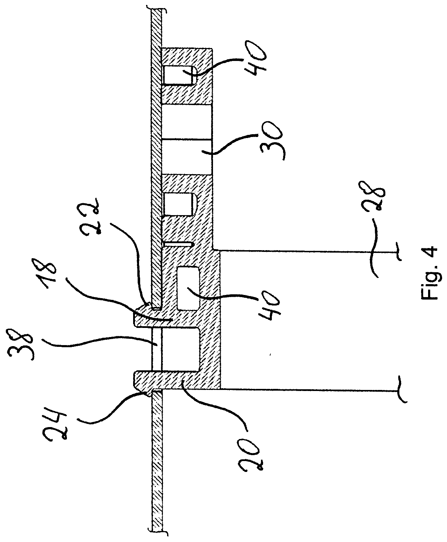

Das erste Federelement 18 weist eine geringere Höhe auf als das zweite Federelement 20 (siehe auch Fig. 4). Das zweite Federelement 20 ist so von dem Befestigungsabschnitt 14 abgesetzt, dass es trotz seiner größeren Höhe im Wesentlichen um dieselbe Distanz von dem Befestigungsabschnitt 14 abragt, wie das erste Federelement 18. Indem die Höhe des zweiten Federelements 20 angepasst wird, kann die Hebelwirkung, die durch den darin angeordneten Schnapphaken 24 bewirkt wird, verändert werden. Dadurch wird die zum Trennen der Verbindung notwendige Kraft festgelegt und so das Recycling der Haltevorrichtung 10 vereinfacht werden.

Der Trageabschnitt 12 weist Verstärkungsrippen 32 auf, die an einer Außenseite des Trageabschnitts 12 angeordnet sind. Die Verstärkungsrippen 32 sind um den Trageabschnitt 12 umlaufend angeordnet und durch Querrippen 34 verbunden.

Zur Befestigung an einem Aufnahmeabschnitt 36 eines Fahrzeugs, der in den Fig. 3 und 4 lediglich schematisch angedeutet ist, wird die Haltevorrichtung 10 so an den Aufnahmeabschnitt 36 herangeführt, dass die Federelemente 18, 20 mit den Schnapphaken 22, 24 durch eine dafür vorgesehene Aufnahmeöffnung 38 hindurchgeführt werden. Durch die Einführschrägen werden die Federelemente 18, 20 während des Befestigungsvorgangs aufeinander zu gebogen, bis die Schnapphaken 22, 24 die Aufnahmeöffnung 38 passiert haben. Haben die Schnapphaken 22, 24 die Aufnahmeöffnung 38 passiert, so federn die Federelemente 18, 20 aufgrund ihrer Federkraft in ihre ursprüngliche Position zurück, soweit die Aufnahmeöffnung 38 das zulässt. Die vorspringenden Schnapphaken 22, 24 blockieren dann die Entnahme der Haltevorrichtung 10 aus der Aufnahmeöffnung 38. Somit bilden die Federelemente 18, 20 und die Schnapphaken 22, 24 zusammen mit der Aufnahmeöffnung 38 eine Schnapp- oder Clipsverbindung.

Zur Materialersparnis und um gegebenenfalls eine gewisse mechanische Flexibilität sicherzustellen, kann die Haltevorrichtung diverse Aussparungen 40 aufweisen. Einige dieser Aussparungen 40 können von den Verstärkungsrippen 32 und den Querrippen 34 begrenzt sein.

Die Federelemente 18, 20 weisen in der vorliegenden Ausführungsform einen rechteckigen Querschnitt auf. Die Federelemente 18, 20 können jeden Querschnitt aufweisen, der gegenüber der Aufnahmeöffnung 38 eine formschlüssige Verbindung erlaubt, durch die Momente übertragen werden können. Zwar werden prismatische Formen der Federelemente 18, 20 bevorzugt, andere Ausgestaltungen, insbesondere mit im Querschnitt vorspringenden Haken, sind aber ebenfalls denkbar.

Die vorliegende Haltevorrichtung 10 kann beispielsweise aus einem hitzebeständigen Kunststoff gefertigt sein. Die Herstellung kann insbesondere im Gießverfahren durchgeführt werden.

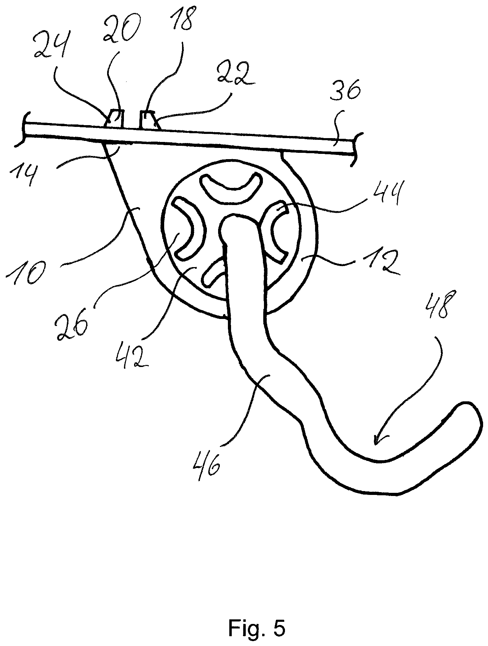

Bei der in der Fig. 5 gezeigten zweiten Ausführungsform der Haltevorrichtung 10 ist in der Öffnung 26 bereits eine Elastomerfeder 42 angeordnet, die beispielsweise an den Trageabschnitt 12 anvulkanisiert ist. Die Elastomerfeder 42 weist zur Abstimmung ihrer Eigenschaften Aussparungen 44 auf. Die Aussparungen 44 sind beispielsweise im Querschnitt als Ringausschnitt oder Halbmond ausgestaltet.

In die Elastomerfeder 42 ist eine Stützeinrichtung 46 einvulkanisiert, die einen Auflagebogen 48 aufweist, in den beispielsweise eine Auspuffleitung eingelegt werden kann. Dadurch, dass die Elastomerfeder 42 mechanisch zwischen der Stützeinrichtung 46 und dem Trageabschnitt 12 angeordnet ist, wird die Stützeinrichtung 46 von dem Trageabschnitt 12 und somit ebenso von dem Aufnahmeabschnitt 36 des Fahrzeugs, an dem die Haltevorrichtung 10 befestigt ist, entkoppelt.

Die vorliegende Haltevorrichtung 10 kann vorteilhaft zur Vormontage oder zur Montage einer Auspuffleitung verwendet werden. Darüber hinaus erlaubt es die vorliegende Haltevorrichtung 10, die Auspuffleitung zur weiteren Montage auszurichten und zu positionieren. Ebenso wird das Recycling vereinfacht.

### Bezugszeichenliste

- 10: Haltevorrichtung
- 12: Trageabschnitt
- 14: Befestigungsabschnitt
- 16: Anlagefläche
- 18: erstes Federelement
- 20: zweites Federelement
- 22: erster Schnapphaken
- 24: zweiter Schnapphaken
- 26: Öffnung
- 28: Innenwand
- 30: Montageöffnung
- 32: Verstärkungsrippe
- 34: Querrippe
- 36: Aufnahmeabschnitt
- 38: Aufnahmeöffnung
- 40: Aussparung
- 42: Elastomerfeder
- 44: Aussparung
- 46: Stützeinrichtung
- 48: Aufnahmebogen

## Patentansprüche

1. Haltevorrichtung (10) zum Halten einer Auspuffleitung einer Auspuffanlage mittels einer gelagerten Stützeinrichtung (46), mit einem Trageabschnitt (12) zur Aufnahme der Stützeinrichtung (46) und einem Befestigungsabschnitt (14) zur Befestigung der Haltevorrichtung an einem Fahrzeug, wobei der Befestigungsabschnitt (14) ein Federelement (18, 20) mit einem Schnapphaken (22, 24) zur Ausbildung einer Schnappverbindung aufweist, **dadurch gekennzeichnet, dass** der Befestigungsabschnitt (14) ein erstes Federelement (18) und ein zweites Federelement (20) aufweist, wobei das erste Federelement (18) eine geringere Höhe als das zweite Federelement (20) aufweist.

2. Haltevorrichtung gemäß Anspruch 1, **dadurch gekennzeichnet, dass** die Schnapphaken (22, 24) der Federelemente (18, 20) in einander entgegengesetzten Richtungen ausgerichtet sind.

3. Haltevorrichtung gemäß Anspruch 1 oder 2, **dadurch gekennzeichnet, dass** die Federelemente (18, 20) parallel zueinander ausgerichtet sind.

4. Haltevorrichtung gemäß einem der voranstehenden Ansprüche, **dadurch gekennzeichnet, dass** das Federelement (18, 20) von dem Befestigungsabschnitt (14) an einer Seite abragend angeordnet ist, die von dem Trageabschnitt (12) abgewandt ist.

5. Haltevorrichtung gemäß einem der voranstehenden Ansprüche, **dadurch gekennzeichnet, dass** der Trageabschnitt (12) eine Öffnung (26) zur Aufnahme der Stützeinrichtung aufweist.

6. Haltevorrichtung gemäß Anspruch 5, **dadurch gekennzeichnet, dass** die Öffnung (26) einen kreisrunden Querschnitt aufweist.

7. Haltevorrichtung gemäß einem der voranstehenden Ansprüche, **dadurch gekennzeichnet, dass** der Trageabschnitt (12) an einer Außenseite Verstärkungsrippen (32) aufweist.

8. Haltevorrichtung gemäß Anspruch 7, **dadurch gekennzeichnet, dass** die Verstärkungsrippen (32) um den Trageabschnitt (12) wenigstens teilweise umlaufend angeordnet sind.

9. Haltevorrichtung gemäß einem der voranstehenden Ansprüche, **dadurch gekennzeichnet, dass** der Befestigungsabschnitt (14) eine Montageöffnung (30) zur Aufnahme eines Befestigungs- und/oder Positionierungsmittels aufweist.

## Claims

1. Holding device (10) for holding an exhaust pipe of an exhaust system in place by means of a mounted support means (46), wherein the holding device has a carrying portion (12) for receiving the support means (46) and a fastening portion (14) for fastening the holding device to a vehicle, the fastening portion (14) having a spring member (18, 20) with a snap hook (22, 24) for forming a snap connection, **characterised in that** the fastening portion (14) has a first spring element (18) and a second spring element (20), the first spring element (18) having a smaller height than the second spring element (20).

2. Holding device according to claim 1, **characterised in that** the snap hooks (22, 24) of the spring elements (18, 20) are aligned in opposite directions.

3. Holding device according to claim 1 or 2, **characterised in that** the spring elements (18, 20) are aligned parallel to each other.

4. Holding device according to one of the preceding claims, **characterised in that** the spring element (18, 20) is arranged projecting from the fastening portion (14) on a side facing away from the carrying portion (12).

5. Holding device according to one of the preceding claims, **characterised in that** the carrying portion (12) has an opening (26) for receiving the support means.

6. Holding device according to claim 5, **characterised in that** the opening (26) has a circular cross-section.

7. Holding device according to one of the preceding claims, **characterised in that** the carrying portion (12) has reinforcing ribs (32) on an outer surface.

8. Holding device according to claim 7, **characterised in that** the reinforcing ribs (32) are arranged at least partially circumferentially around the carrying portion (12).

9. Holding device according to one of the preceding claims, **characterised in that** the fastening portion (14) has an assembly opening (30) for receiving a fastening and/or positioning means.

## Revendications

1. Dispositif de retenue (10) pour retenir un conduit d'échappement d'un système d'échappement à l'aide d'un moyen de soutien (46) supporté, comportant un tronçon porteur (12) pour recevoir le moyen de soutien (46) et un tronçon de fixation (14) pour fixer le dispositif de retenue à un véhicule, le tronçon de fixation (14) comprenant un élément formant ressort (18, 20) pourvu d'un crochet d'enclenchement (22, 24) pour réaliser une liaison par enclenchement, **caractérisé en ce que** le tronçon de fixation (14) comprend un premier élément formant ressort (18) et un second élément formant ressort (20), le premier élément formant ressort (18) présentant une hauteur inférieure à celle du second élément formant ressort (20).

2. Dispositif de retenue selon la revendication 1, **caractérisé en ce que** les crochets d'enclenchement (22, 24) des éléments formant ressorts (18, 20) sont orientés dans des directions opposées l'une à l'autre.

3. Dispositif de retenue selon la revendication 1 ou 2, **caractérisé en ce que** les éléments formant ressorts (18, 20) sont orientés parallèlement l'un à l'autre.

4. Dispositif de retenue selon l'une des revendications précédentes, **caractérisé en ce que** l'élément formant ressort (18, 20) est agencé en faisant saillie du tronçon de fixation (14) sur un côté qui est détourné du tronçon porteur (12).

5. Dispositif de retenue selon l'une des revendications précédentes, **caractérisé en ce que** le tronçon porteur (12) présente une ouverture (26) pour recevoir le moyen de soutien.

6. Dispositif de retenue selon la revendication 5, **caractérisé en ce que** l'ouverture (26) présente une section transversale circulaire.

7. Dispositif de retenue selon l'une des revendications précédentes, **caractérisé en ce que** le tronçon porteur (12) présente des nervures de renforcement (32) sur un côté extérieur.

8. Dispositif de retenue selon la revendication 7, **caractérisé en ce que** les nervures de renforcement (32) sont agencées de manière à s'étendre au moins en partie périphériquement autour du tronçon porteur (12).

9. Dispositif de retenue selon l'une des revendications précédentes, **caractérisé en ce que** le tronçon de fixation (14) présente une ouverture de montage (30) pour recevoir un moyen de fixation et/ou de positionnement.
